# EUROPÄISCHE PATENTSCHRIFT

(11) **EP 1 184 584 B1**
(45) Veröffentlichungstag und Bekanntmachung des Hinweises auf die Patenterteilung: **03.11.2004**
(21) Anmeldenummer: 01116182.5
(22) Anmeldetag: 04.07.2001
(51) Int. Cl.: F16C 29/08

(54) **Anordnung eines Abdeckbandes an einer Linearführung**
Cover strip mounting in a linear bearing
Montage d'une bande de recouvrement dans un palier linéaire

(30) Priorität: 03.08.2000 DE 10037812
(43) Veröffentlichungstag der Anmeldung: 06.03.2002
(73) Patentinhaber: INA-Schaeffler KG, 91074 Herzogenaurach (DE)
(72) Erfinder: Koch, Richard, 91466 Gerhardshofen (DE); Kremer, Johann, 91056 Erlangen (DE)

(56) Entgegenhaltungen:
- DE-A- 19 524 810
- DE-A- 19 959 508
- US-A- 5 575 566
- US-A- 6 012 846

## Beschreibung

### Gebiet der Erfindung

Die Erfindung betrifft eine Anordnung eines Abdeckbandes an einer Linearführung, zum Verschließen von Bohrungen einer Führungsschiene, welche Befestigungsschrauben enthalten, wobei das Abdeckband in einer Längsnut der Führungsschiene eingesteckt und mit seiner bezüglich der Führungsschiene äußeren Oberfläche in der Ebene einer Lauffläche der Führungsschiene angeordnet ist und zwei sich in Längsrichtung der Führungsschiene erstreckende federnde Halteleisten für die Befestigung aufweist, die innerhalb der Längsnut an den die Längsnut begrenzenden seitlichen Nutwänden der Führungsschiene anliegend angeordnet sind.

### Hintergrund der Erfindung

Führungsschienen werden an Werkzeugmaschinen verwendet und müssen als Verschleißteile von Zeit zu Zeit ausgewechselt werden. Daher sind sie häufig mit Schrauben am Maschinengestell befestigt. Zum Verschließen der Bohrungen einer Führungsschiene für die Befestigungsschrauben ist es bekannt, entweder in den Endabschnitt der jeweiligen Bohrung einen Stopfen einzusetzen, wie es beispielsweise die Druckschriften DE 30 46 590 A1 und DE 93 16 349 U1 zeigen, oder die Führungsschiene wird in der Fluchtungslinie der Befestigungsbohrungen mit einer nutförmigen Aussparung versehen, in welche ein Abdeckband passend eingesetzt wird. Solche Anordnungen zeigen beispielsweise die Druckschriften DD 237 805 A1 und EP 0 311 895 A1. Das Abdeckband wird häufig innerhalb der nutförmigen Aussparung an der Führungsschiene angeklebt. Dabei besteht aber die Gefahr, dass sich die Klebung löst.

Aus der Druckschrift DE 38 12 505 A1 ist eine Linearführungsvorrichtung bekannt, bei welcher eine aus Kunststoff bestehende Platte oder Leiste von einer Stirnseite der Führungsschiene aus in eine Längsnut eingesetzt und dort mittels Rippen formschlüssig gehalten ist. Diese Rippen sind an den Seitenflächen der Leiste angeformt und greifen innerhalb der Längsnut in entsprechend ausgesparte Abschnitte der Führungsschiene ein. Durch Einschleifen lässt sich eine solche Form der Längsnut oder eine denselben Zweck erfüllende Schwalbenschwanzform für eine entsprechende trapezförmige Leiste zwar herstellen. Da hierzu aber sehr kleine Werkzeuge erforderlich sind, würde eine solche Lösung sehr teuer.

Die Druckschrift DE 195 24 810 A1 zeigt eine Anordnung der eingangs genannten Art, bei welcher das Abdeckband aus einer oberen Schicht und einer unteren Schicht besteht, wobei die beiden Halteleisten von Bereichen gebildet werden, die an den beiden Längsseiten der unteren Schicht abgebogen sind. Die obere Schicht des Abdeckbandes liegt innerhalb der Längsnut an seitlichen Anlageflächen der Führungsschiene an, die durch Fräsen von Stegen, deren Schrägstellen mit Druckwalzen und anschließendes Schleifen entstanden sind, so dass sich dafür eine aufwendige Herstellung ergibt. Außerdem fehlt diesem Abdeckband in seinem mittleren Bereich innerhalb der Längsnut eine Abstützmöglichkeit an der Führungsschiene. Damit besteht die Gefahr, dass das Abdeckband sich verbiegt und auswölbt, wodurch die Abdichtung an seiner äußeren Oberfläche beeinträchtigt wird.

### Zusammenfassung der Erfindung

Der Erfindung liegt die Aufgabe zu Grunde, die Anordnung des Abdeckbandes an der Führungsschiene in der Funktion zu verbessern sowie wirtschaftlicher und kostengünstiger zu gestalten.

Diese Aufgabe wird erfindungsgemäß dadurch gelöst, dass das Abdeckband mit seiner ebenen inneren Oberfläche auf einer die Längsnut nach innen begrenzenden ebenen Stützfläche der Führungsschiene abgestützt ist, wobei in dem Abdeckband in den Bereichen seiner Längsseiten zwei von der inneren Oberfläche ausgehende, in Längsrichtung verlaufende Ausnehmungen eingearbeitet sind, durch welche die federnden Halteleisten erzeugt sind.

Jede seitliche Nutwand der Führungsschiene kann eine im Querschnitt konkave Hinterschneidung aufweisen, in welcher eine Auswölbung der benachbarten Halteleiste eingerastet ist. Die Halteleiste kann sich dabei jeweils mit einem an der Auswölbung angrenzenden, im Querschnitt V-förmigen Endbereich zur Führungsschiene hin erstrecken.

Das Abdeckband kann ein metallisches Bauteil sein, beispielsweise kann es mit seinen durch die Ausnehmungen erzeugten Halteleisten ein gewalztes Stahlband sein. Ein solches Band hat den Vorteil, dass es aufgerollt gelagert und transportiert werden kann, wobei benötigte Längenabschnitte für Linearführungen bei Bedarf abgerollt und abgeschnitten werden können.

Die erfindungsgemäß gewalzten Abdeckbänder sind sehr kostengünstig herstellbar. Sie können mit beliebiger Länge ausgeführt, also "endlos" profiliert werden. Die Arretierung des Abdeckbandes in der Führungsschiene wird durch die Schienengestaltung im Bereich der Längsnut und die Bandkontur ermöglicht. Mit der erfindungsgemäßen Ausführung erhält man eine einteilige, naht- und kantenfreie Abdeckung. Das gewalzte Abdeckband braucht nur noch in die Führungsschiene eingedrückt zu werden.

Durch die spezielle Geometrie des Abdeckbandes und der Längsnut liegt das Band immer eben auf der Stützfläche auf, so dass ein Verbiegen bzw. Verwölben des Abdeckbandes nicht erfolgen kann. Dadurch ist eine hohe Lebensdauer der Dichtungen der Linearführung gewährleistet, welche im Betrieb die äußere Oberfläche des Abdeckbandes und die benachbarte Lauffläche der Führungsschiene überstreichen.

### Kurze Beschreibung der Zeichnung

Ein Ausführungsbeispiel der Erfindung ist in der Zeichnung dargestellt und wird im folgenden im Vergleich mit vorbekannten Anordnungen näher beschrieben. Es zeigen:
- Figur 1: eine erfindungsgemäße Anordnung, dargestellt durch eine perspektivische Ansicht des Endbereichs einer Führungsschiene mit einem eingesetzten Abdeckband;
- Figur 2: eine die innere Bandoberfläche zeigende perspektivische Ansicht des Abdeckbandes nach Figur 1;
- Figur 3: eine weitere perspektivische Ansicht des Abdeckbandes nach Figur 1;
- Figur 4: eine vergrößerte Darstellung des Verbindungsbereichs des Abdeckbandes und der Führungsschiene;
- Figur 5: einen Querschnitt durch eine von einem Schlitten umgebene Führungsschiene einer Linearführung, mit einem Stopfen zum Verschließen eines Bohrungsendabschnittes, nach dem Stand der Technik;
- Figur 6: einen vergrößert dargestellten Teilquerschnitt durch den Bohrungsbereich einer Führungsschiene einer weiteren Linearführung mit einem Abdeckband, nach dem Stand der Technik.

### Ausführliche Beschreibung der Zeichnung

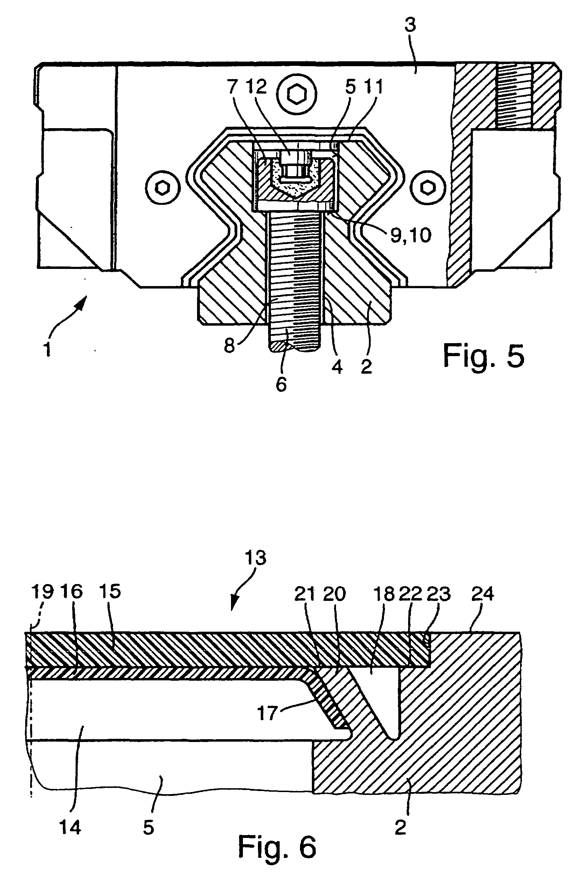

Aus Figur 5 ist ein Querschnitt durch eine Lineareinheit 1 entnehmbar. Diese besteht aus einem längsbeweglich auf einer Führungsschiene 2 angeordneten Schlitten 3. Auf diesem sind nicht dargestellte Maschinenelemente befestigt. Der Schlitten 3 stützt sich über eine Gleitführung bzw. über endlos in seinem Inneren verlaufende, nicht dargestellte Wälzkörper auf der Führungsschiene 2 ab.

Die Führungsschiene 2 weist senkrecht zur Bewegungsrichtung angeordnete Bohrungen 4 mit jeweils einem radial erweiterten Endabschnitt 5 auf. In diesen Bohrungen 4, welche über die Länge der Führungsschiene 2 gleichmäßig verteilt angeordnet sein können, befinden sich Befestigungsschrauben 6. Diese weisen einen Schraubenkopf 7 auf, der mit seiner dem Schaft 8 der Befestigungsschraube 6 zugewandten Ringfläche jeweils an einem Absatz 10 des Endabschnittes 5 der Bohrung 4 anliegt.

Die Befestigungsschrauben 6 dienen der Befestigung der Führungsschiene 2 auf einem nicht näher bezeichneten Maschinentisch oder ähnlichem. Jede Befestigungsschraube 6 liegt mit ihrem Schraubenkopf 7 in Bohrrichtung gesehen tiefer als die obere Lauffläche 11 der Führungsschiene 2. Die Bohrungen 4 sind in Figur 5 durch Stopfen 12 verschlossen, deren Stirnflächen im fertigmontierten Zustand in der Ebene der Lauffläche 11 der Führungsschiene 2 liegen.

Gegenüber dieser Anordnung sind bei einer weiteren vorbekannten Anordnung, wie sie beispielsweise Figur 6 zeigt, mehrere hintereinander befindliche, mit Befestigungsschrauben gefüllte Bohrungen mit radial erweiterten Endabschnitten für Schraubenköpfe durch ein gemeinsames Abdeckband 13 verschlossen, das in einer Längsnut 14 der Führungsschiene 2 eingesetzt ist. Das Abdeckband 13 besteht aus einer oberen Schicht 15 und einer unteren Schicht 16. An den beiden Längsseiten der unteren Schicht 16 sind nach unten abgebogene Halteleisten 17 ausgebildet. Im Übrigen liegt die untere Schicht 16 an der oberen Schicht 15 des Abdeckbandes 13 an, wobei die beiden Schichten aneinander befestigt sind.

Die federnden Halteleisten 17 werden in der Längsnut 14 der Führungsschiene 2 dadurch gehalten, dass die Längsnut 14 eine Schwalbenschwanzform aufweist. Diese ist dadurch entstanden, dass in die beiden Seiten der Längsnut in Längsrichtung der Führungsschiene 2 Ausfräsungen 18 eingearbeitet sind. Dargestellt ist in Figur 6 nur die rechte Seite von der Mittellinie 19 aus. Die linke Seite dieses Führungsschienenausschnitts ist spielgelbildlich zu der rechten Seiten ausgeführt, wobei die Mittellinie 19 die Symmetrieachse bildet.

Infolge der Ausfräsungen 18 sind an der Führungsschiene 2 Stege 20 entstanden, die die Längsnut 14 an den beiden in Längsrichtung der Führungsschiene 2 verlaufenden Seiten begrenzen. Durch einen weiteren Arbeitsgang, z. B. durch Einwirkung von Druckwalzen, sind die Stege 20 jeweils zur Innenseite der Führungsschiene 2 schräggestellt. Damit ergibt sich die Schwalbenschwanzform der Längsnut 14. Durch einen Schleifvorgang werden dann ebene Anlageflächen 21 der Stege 20 und ebene Anlageflächen 22 von seitlichen Randausnehmungen 23 der Führungsschiene 2 gebildet. An diesen Anlageflächen 21 und 22 liegt die obere Schicht 15 des Abdeckbandes 13 an. Das Dikkenmaß der oberen Schicht 15 des Abdeckbandes 13 ist so gewählt, dass seine äußere Oberfläche in der Ebene einer Lauffläche 24 der Führungsschiene 2 liegt.

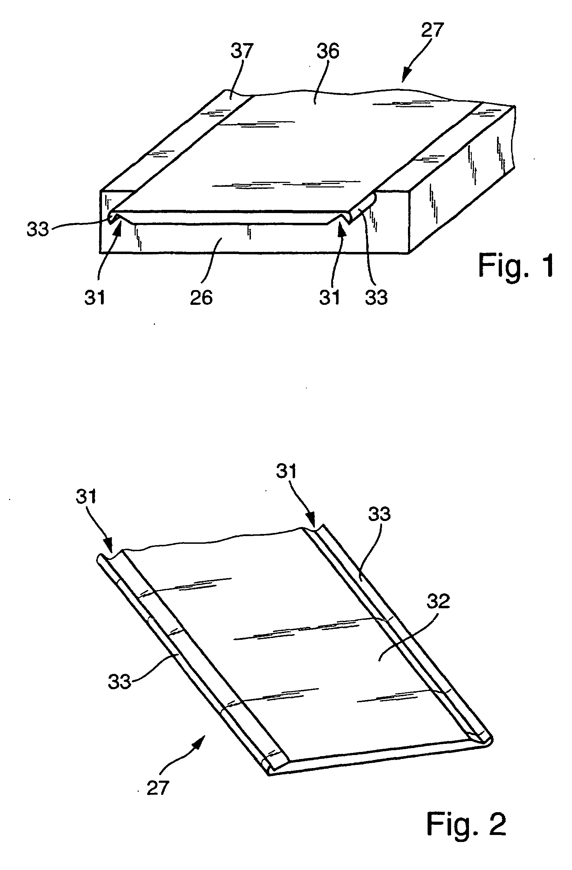

Bei der in den Figuren 1 bis 4 dargestellten erfindungsgemäßen Anordnung ist die Längsnut 25 der Führungsschiene 26, in welcher das Abdeckband 27 angeordnet ist, von einer ebenen Stützfläche 28 begrenzt, an welcher sich innerhalb der Führungsschiene 26 zwei in Schienenlängsrichtung verlaufende seitliche Nutwände 29 anschließen. Jede Nutwand 29 weist eine konkave Hinterschneidung 30 auf.

Das Abdeckband 27 weist an seinen beiden Längsseiten zwei parallele Ausnehmungen 31 auf, die von seiner inneren Oberfläche 32 ausgehen. Dadurch sind zwei Halteleisten 33 gebildet, die der Befestigung des Abdeckbandes 27 an der Führungsschiene 26 innerhalb der Längsnut 25 dienen. Jede Halteleiste 33 weist eine zur Außenseite des Abdeckbandes 27 gerichtete Auswölbung 34 auf und geht in einen im Querschnitt V-förmigen Endbereich 35 über, der bei eingesetztem Abdeckband 27 zur Führungsschiene 26 gewandt ist.

Das Abdeckband 27 kann nun in die Längsnut 25 der Führungsschiene 26 hineingedrückt werden, wonach seine innere Oberfläche 32 an der Stützfläche 28 anliegt. Die Abmessungen des Abdeckbandes 27 und der Längsnut 25 sind so gewählt, dass das eingedrückte Abdeckband 27 mit seiner äußeren Oberfläche 36 in der Ebene einer Lauffläche 37 der Führungsschiene 26 liegt, an welcher die Lippendichtung des Schlittens der Linearführung im Betrieb entlanggleitet.

Beim Eindrücken des Abdeckbandes 27 gleiten von jeder Halteleiste 33 der V-förmige Endbereich 35 und die Auswölbung 34 an der benachbarten seitlichen Nutwand 29 entlang. Dabei wird die Halteleiste 33 zur Mitte des Abdeckbandes 27 hin federnd eingebogen, bis die Auswölbung 34 in die konkave Hinterschneidung 30 einrastet. Damit ist das Abdeckband 27 in der Führungsschiene 26 in einfacher Weise befestigt. In entsprechender, ebenso einfacher Weise kann das Abdeckband 27, falls erforderlich, aus der Führungsschiene 26 wieder herausgezogen werden.

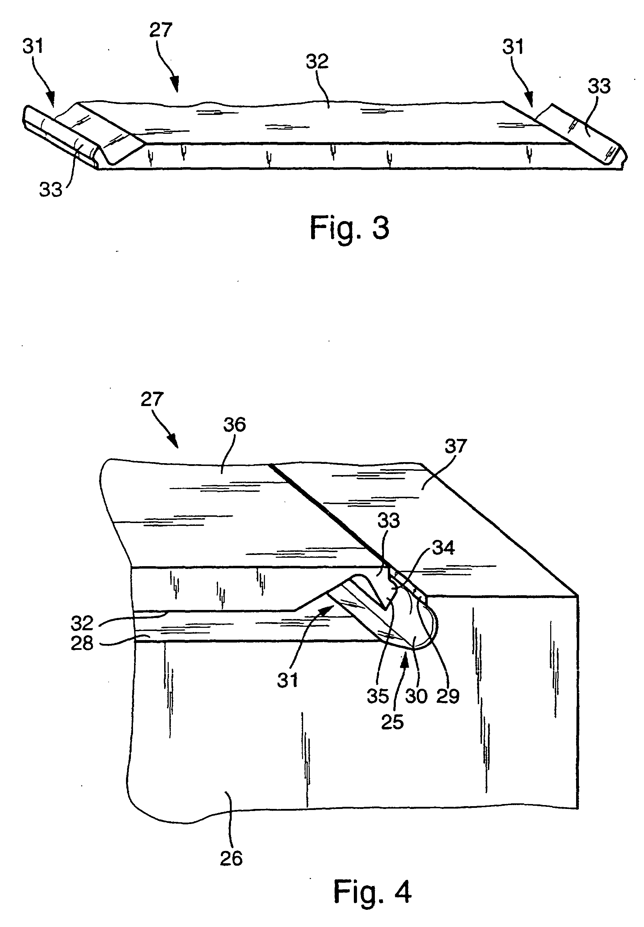

Es ist auch möglich, die Längsnut der Führungsschiene im Querschnitt exakt rechtwinklig auszuführen, so dass Hinterschneidungen, wie sie die Führungsschiene 26 in Figur 4 mit der Bezugszahl 30 aufweist, fehlen. In diesem Fall wird das Abdeckband nur über die Vorspannung der Halteleisten 33 an den Seitenwänden der Längsnut in der Führungsschiene gehalten.

### Bezugszahlenliste

- 1: Lineareinheit
- 2: Führungsschiene
- 3: Schlitten
- 4: Bohrung
- 5: erweiterter Endabschnitt
- 6: Befestigungsschraube
- 7: Schraubenkopf
- 8: Schaft
- 9: Ringfläche
- 10: Absatz
- 11: Lauffläche
- 12: Stopfen
- 13: Abdeckband
- 14: Längsnut
- 15: obere Schicht
- 16: untere Schicht
- 17: Halteleiste
- 18: Ausfräsung
- 19: Mittellinie
- 20: Steg
- 21: ebene Anlagefläche
- 22: ebene Anlagefläche
- 23: seitliche Randausnehmung
- 24: Lauffläche
- 25: Längsnut
- 26: Führungsschiene
- 27: Abdeckband
- 28: Stützfläche
- 29: seitliche Nutwand
- 30: Hinterschneidung
- 31: Ausnehmung
- 32: innere Oberfläche
- 33: Halteleiste
- 34: Auswölbung
- 35: V-förmiger Endbereich
- 36: äußere Oberfläche
- 37: Lauffläche

## Patentansprüche

1. Anordnung eines Abdeckbandes (27) an einer Linearführung, zum Verschließen von Bohrungen einer Führungsschiene (26), welche Befestigungsschrauben enthalten, wobei das Abdeckband (27) in einer Längsnut (25) der Führungsschiene (26) eingesteckt und mit seiner bezüglich der Führungsschiene (26) äußeren Oberfläche (36) in der Ebene einer Lauffläche (37) der Führungsschiene (26) angeordnet ist und zwei sich in Längsrichtung der Führungsschiene (26) erstreckende federnde Halteleisten (33) für die Befestigung aufweist, die innerhalb der Längsnut (25) an den die Längsnut (25) begrenzenden seitlichen Nutwänden (29) der Führungsschiene (26) anliegend angeordnet sind, **dadurch gekennzeichnet, dass** das Abdeckband (27) mit seiner ebenen inneren Oberfläche (32) auf einer die Längsnut (25) nach innen begrenzenden ebenen Stützfläche (28) der Führungsschiene (26) abgestützt ist, wobei in dem Abdeckband (27) in den Bereichen seiner Längsseiten zwei von der inneren Oberfläche (32) ausgehende, in Längsrichtung verlaufende Ausnehmungen (31) eingearbeitet sind, durch welche die federnden Halteleisten (33) erzeugt sind.

2. Anordnung nach Anspruch 1, **dadurch gekennzeichnet, dass** jede seitliche Nutwand (29) der Führungsschiene (26) eine im Querschnitt konkave Hinterschneidung (30) aufweist, in welcher eine Auswölbung (34) der benachbarten Halteleiste (33) eingerastet ist.

3. Anordnung nach Anspruch 2, **dadurch gekennzeichnet, dass** die Halteleiste (33) sich jeweils mit einem an der Auswölbung (34) angrenzenden, im Querschnitt V-förmigen Endbereich (35) zur Führungsschiene (26) hin erstreckt.

4. Anordnung nach Anspruch 1, **dadurch gekennzeichnet, dass** das Abdeckband (27) ein metallisches Bauteil ist.

5. Anordnung nach Anspruch 4, **dadurch gekennzeichnet, dass** das Abdeckband (27) mit seinen durch die Ausnehmungen (31) erzeugten Halteleisten (33) ein gewalztes Stahlband ist.

## Claims

1. Arrangement of a cover strip (27) on a linear guide, for closing holes in a guide rail (26) that contain fastening screws, the cover strip (27) being inserted in a longitudinal groove (25) of the guide rail (26) and, with its outer surface (36) relative to the guide rail (26), being arranged in the plane of a running surface (37) of the guide rail (26) and having two resilient retaining strips (33) for the fastening, these retaining strips extending in the longitudinal direction of the guide rail (26) and being arranged so as to bear inside the longitudinal groove (25) against those lateral groove walls (29) of the guide rail (26) which define the longitudinal groove (25), **characterized in that** the cover strip (27) is supported by means of its planar, inner surface (32) on a planar supporting surface (28) of the guide rail (26), which supporting surface inwardly bounds the longitudinal groove (25), two recesses (31) which emerge from the inner surface (32) and run in the longitudinal direction being incorporated in the cover strip (27), in the regions of its longitudinal sides, and being used to produce the resilient retaining strips (33).

2. Arrangement according to Claim 1, **characterized in that** each lateral groove wall (29) of the guide rail (26) has an undercut (30) of concave cross section in which an arched portion (34) of the adjacent retaining strip (33) is latched.

3. Arrangement according to Claim 2, **characterized in that** the retaining strip (33) extends in each case by means of an end region (35), which is adjacent to the arched portion (34) and is V-shaped in cross section, towards the guide rail (26).

4. Arrangement according to Claim 1, **characterized in that** the cover strip (27) is a metallic component.

5. Arrangement according to Claim 4, **characterized in that** the cover strip (27) together with its retaining strips (33) produced by the recesses (31) is a rolled steel strip.

## Revendications

1. Montage d'une bande de recouvrement (27) dans un palier linéaire pour obturer des alésages d'un rail de guidage (26) qui contiennent des vis de fixation, la bande de recouvrement (27) étant insérée dans une rainure longitudinale (25) du rail de guidage (26) et montée avec sa surface extérieure (36) par rapport au rail de guidage (26) dans le plan d'une surface de roulement (37) du rail de guidage (26) et présentant pour la fixation deux languettes de retenue élastiques (33) s'étendant dans la direction longitudinale du rail de guidage (26) qui sont montées à l'intérieur de la rainure longitudinale (25), appliquées contre les parois de rainure latérales (29) du rail de guidage (26) délimitant la rainure longitudinale (25), **caractérisé en ce que** la bande de recouvrement (27) avec sa surface intérieure plane (32) est appuyée sur une surface d'appui plane (28) du rail de guidage (26) délimitant la rainure longitudinale (25) vers l'intérieur, deux évidements (31) courant dans la direction longitudinale à partir de la surface intérieure (32), par lesquels les languettes de retenue élastiques (33) sont produites, étant ménagés dans la bande de recouvrement (27) dans les zones de ses côtés longitudinaux.

2. Montage selon la revendication 1, **caractérisé en ce que** chaque paroi de rainure latérale (29) du rail de guidage (26) présente une contre-dépouille (30) de section concave dans laquelle une bombure (34) de la languette de retenue voisine (33) est enclenchée.

3. Montage selon la revendication 2, **caractérisé en ce que** la languette de retenue (33) s'étend avec une zone terminale à section en V (35) adjacente à la bombure (34) jusqu'au rail de guidage (26).

4. Montage selon la revendication 1, **caractérisé en ce que** la bande de recouvrement (27) est un élément métallique.

5. Montage selon la revendication 4, **caractérisé en ce que** la bande de recouvrement (27) est avec ses languettes de retenue (33) produites par les évidements (31) une bande d'acier laminée.
